# EUROPEAN PATENT APPLICATION

(11) **EP 3 503 101 A1**
(43) Date of publication of application: **26.06.2019**
(21) Application number: 17208717.3
(22) Date of filing: 20.12.2017
(51) Int. Cl.: G11B 27/031

(54) **OBJECT BASED USER INTERFACE**

(71) Applicant: Nokia Technologies Oy, 02610 Espoo (FI)
(72) Inventor: OIKKONEN, Markku, 00640 Helsinki (FI); COPLEY, Devon, San Francisco, CA California 94122 (US)
(74) Representative: Nokia EPO representatives

(57) **Abstract**

Methods, computer program products, and apparatus are included. For example, an apparatus including hardware or any means for generating a user interface including a plurality of objects, including a first object and a second object, wherein the first object represents a first video segment and the second object represents a second video segment, wherein at least one of the first object and the second object is configured to at least change an orientation of the respective first video segment or second video segment; receiving, via the user interface, an input indicative of a change to the orientation of the first video segment represented by the first object; and arranging a video sequence comprising the changed first video segment represented by the first object and the second video segment represented by the second object, wherein the changed first video segment includes the change in the orientation based on the received input.

## Description

### Field

The subject matter described herein relates to user interfaces and, more particularly, object based user interfaces.

### Background

Multidirectional cameras, such as the Nokia OZO as well as other types of cameras, may be used to capture video content including multidirectional video content (which may include a panorama of up to 360 degrees of panoramic video content). A viewer of this multidirectional video content may pan, or view, in multiple directions to view the multidirectional video content from different perspectives. To illustrate further, the viewer may pan up to look at the sky, pan down to view the ground, and/or pan left or right to view the surrounding area. Often, this multidirectional video content may be used to provide virtual reality (VR), augmented reality (AR), mixed reality, or other types of immersive view experiences to the viewer.

### Summary

Methods and apparatus, including computer program products, are provided for object based user interfaces.

In some example embodiments, there may be provided an apparatus that includes hardware or any means for generating a user interface including a plurality of objects, the plurality of objects including a first object and a second object, wherein the first object represents a first video segment and the second object represents a second video segment, wherein at least one of the first object and the second object is configured to at least change an orientation of the respective first video segment or second video segment; receiving, via the user interface, an input indicative of a change to the orientation of the first video segment represented by the first object; and arranging a video sequence comprising the changed first video segment represented by the first object and the second video segment represented by the second object, wherein the changed first video segment includes the change in the orientation based on the received input.

In some variations, one or more of the features disclosed herein including the following features can optionally be included in any feasible combination. Before including the first and second object, a selection of at least one of the first object and the second object may be received. The input may be received before or after the selection of the first object and the second object. The first object may represent the first video segment by at least presenting, within the first object, at least one frame of the first video segment. The second object may represent the second video segment by at least presenting, within the second object, at least one frame of the second video segment. At least one of the first object and the second object may include a graphical user interface element to control, for example, via the user interface, the orientation of the respective first video segment or second video segment. Another input may be received indicative of a change to the orientation of the second video segment represented by the second object; and the video sequence is arranged that comprises the changed first video segment represented by the first object and the changed second video segment represented by the second object, wherein the changed second video segment includes the change in the orientation based on the received another input. The plurality of objects may include a three dimensional user interface elements. The first video segment and/or the second video segment may include one or more of multidirectional video content captured by a multidirectional camera, computer-generated video content, virtual reality video content, augmented reality video content, mixed-reality video content, three-dimensional video content, and two-dimensional video content. The orientation of the first video segment may be determined from an orientation of a camera capturing the first video segment, and/or determined from data. The data may indicate viewing behavior, viewing direction, and/or a point of attention on at least one frame of the first video segment. The hardware or the means may be further configured for at least receiving, via the user interface, a change in a position, a shape, and/or a volume, of the first object, wherein the change modifies an audio property and/or a visual property associated with at least one frame of the first video segment. The hardware or the means may be further configured for at least receiving, via the user interface, an input merging the first object and the second object, the merged first object and second object having a transition effect applied between the first video segment and the second video segment. At least one of the plurality of objects may include a sphere and/or a polyhedron, wherein the first object comprises a first sphere and/or a first polyhedron. The second object may include a second sphere and/or a second polyhedron. The relative positons of the plurality of objects may indicate locations of the multidirectional cameras capturing the first video segment and the second video segment. The hardware or the means may include at least one processor and at least one memory including computer program code, the at least one memory including the computer program code configured to, with the at least one processor, cause performance of the apparatus.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of Drawings

In the drawings,
FIG. 1A depicts a system including a plurality of multidirectional cameras, in accordance with some example embodiments;
FIG. 1B depicts an example of certain frames of the multidirectional video content generated by the multidirectional cameras, in accordance with some example embodiments;
FIG. 1C depicts another example of certain frames of the multidirectional video content generated by the multidirectional cameras, in accordance with some example embodiments;
FIG. 2 depicts an example of a user interface including objects such as spheres, in accordance with some example embodiments;
FIG. 3A depicts the user interface of FIG. 2 presented in a 3D format, in accordance with some example embodiments;
FIG. 3B depicts examples of objects such as spheres, in accordance with some example embodiments;
FIG. 3C depicts a side view of the user interface of FIG. 3A, in accordance with some example embodiments;
FIG. 3D depicts performing an operation on objects such as spheres, in accordance with some example embodiments;
FIGs. 4A-4D depicts additional examples of user interfaces, in accordance with some example embodiments;
FIG. 5 depicts an example of a process, in accordance with some example embodiments; and
FIGs. 6 and 7 depict examples of apparatus, in accordance with some example embodiments.

Like labels are used to refer to same or similar items in the drawings.

### Detailed Description

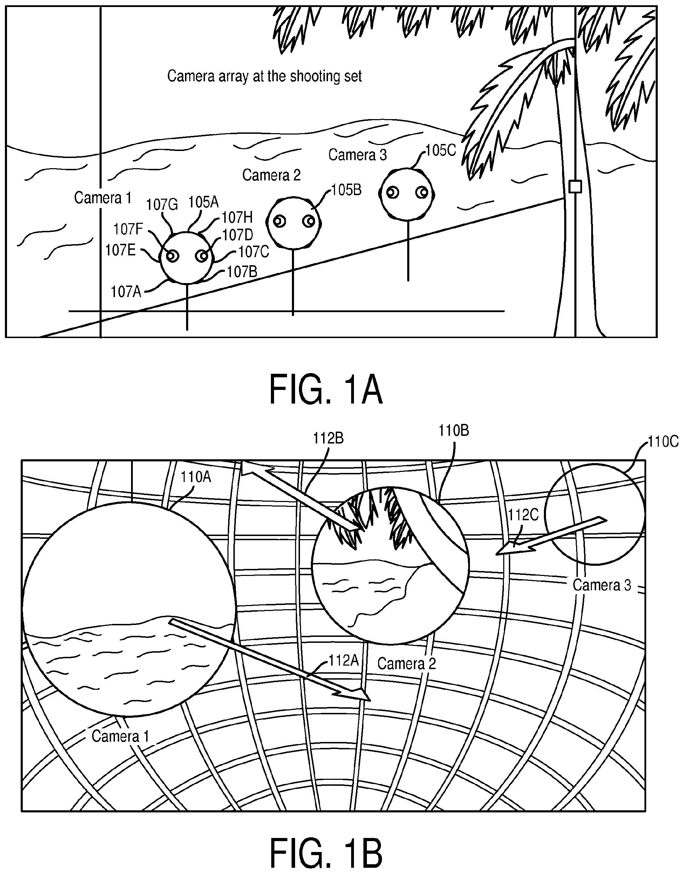

FIG. 1A depicts a system including a plurality of multidirectional cameras 105A-C, in accordance with some example embodiments. Each of these multidirectional cameras 105A-C may include a plurality of imaging sensors (for example, lenses with corresponding digital image sensors) to capture video content including multidirectional video content captured from different perspectives, such as in different directions from the center of the multidirectional camera. For example, the multidirectional camera 105A may include a plurality of lenses 107A-H for capturing multidirectional video content (e.g., video content including a plurality of directions, such as panoramic video content from different orientations). The other multidirectional cameras 105B-C may capture multidirectional video content from other locations, when compared to multidirectional camera 105A. Although FIG. 1A depicts three multidirectional cameras, other quantities of multidirectional cameras may be used as well. Each multidirectional camera may include any quantity of imaging sensors (for example, from one imaging sensor to eight imaging sensors, to more than 10 imaging sensors and/or the like). Moreover, each multidirectional camera may include any quantity of microphones to provide audio as well as other types of sensors, such as a Global Positioning System (GPS) sensor, a gyroscope, and/or the like.

In the case of multidirectional video content, such as the video content captured by the cameras 107A-C, the video content may provide a viewer with a more realistic or immersive experience via VR, AR, mixed reality, and/or other video presentation technologies, when compared to more traditional single view video content. However, the multidirectional aspects of the video content may make it a challenge to handle with respect to viewing, editing, and/or the like. For example, the viewing, editing, and/or manipulating of the multidirectional video content may be challenging due in part to the different orientations of the content as well as the use of multiple cameras. To illustrate further, combining frames of multidirectional video content may need to take into account the orientation of each frame to ensure a desired transition of content (for example, smooth transition based on content) between frames. Poor control of the orientation of the video content may be, at the very least, jarring to a viewer if the viewer's viewing perspectives or directions abruptly change in the transition. In some example embodiments, the subject matter disclosed herein may address the challenges associated with video content having different orientations.

FIG. 1B depicts an example of certain frames of the multidirectional video content generated by the multidirectional cameras 105A-C, in accordance with some example embodiments. The image content of a camera, such as camera 105A-C, may be presented within (for example, on the surface of, within, and/or the like) the surface of the corresponding object 110A-C. As used herein, the term "object" refers to a graphical user interface element. Although some of the examples herein refer to the object as a sphere (as in the example of FIG. 1B), the objects 110A-C may have other forms including polyhedrons, spherical polyhedrons, cylinders, cones, and/or any other type of object configured to present, within the object, at least one frame of video content. The "object" may be considered "virtual" in the sense that the "object" is a graphical user interface element, rather than a physical object. Moreover, the "object" may be referred to as a 3D object, in which case the object represents a 3D geometric object rendered as a graphical user interface element.

The surface of object 110A may, for example, include the stitched frames or images from the lenses 107A-107H of camera 105A. The frame may be a still image, which may be a part of the video. There can be any number of frames per second (fps) in a video (for example, 24 fps, 29.97 fps, and/or the like). In the example of FIG. 1B, at least a first frame of the multidirectional video content of the first multidirectional camera 105A may be presented within the object 110A. For example, a single frame (or a first frame of a related sequence of frames, such as a video segment) may be presented within the object 110A.

In some example embodiments, the object 110A may also include an indication of the orientation of a camera that captured the frame. An orientation of a camera may be any reference orientation with respect to any part of the camera, such as any lens, microphone, sensor, control, tripod mount, and/or the like. An orientation may also be any reference orientation based on the placement of a camera during shooting or recording. For example, the east, south, west, north of the camera, the zenith above the camera, the nadir underneath the camera, or any coordinate (e.g., expressible using right ascension and declination). In the example of FIG. 1B, an orientation indicator is an arrow 112A, although other types of graphical user interface elements may be used to change the orientation. The arrow 112A may show the orientation of the camera 105A that captured the frame depicted within the object 110A. In the instant example, the orientation indicator 112A may be adjusted, via a user interface, to change the corresponding orientation of the frame(s), such as video segment, associated with object 110A. For example, at least one frame of recorded video content may have its orientation changes by adjusting orientation indicator 112A.

Moreover, the orientation indicator 112A may indicate the direction of the optical axis of one of the lenses 107A-H of camera 105A. Alternatively or additionally, the orientation indicator 112A may show the perspective or direction of view of a user-viewer of the frame(s) associated with and/or depicted within the sphere 110A. Alternatively or additionally, the orientation indicator 112A may show the user-viewer's area of focus or point of attention on the frame(s) associated with and/or depicted within the object 110A. The data determining the direction of view and/or points of attention of the user-viewer may have been obtained from, for example, metadata indicative of the viewing behavior of the user-viewer in an immersive viewing environment. Moreover, the orientation indicator, such as arrow 112B, may show the corresponding orientation of the frame(s) depicted within or associated with the object 110B, and the orientation indicator, such as arrow 112C, may show the corresponding orientation of the frame depicted within or associated with object 110C.

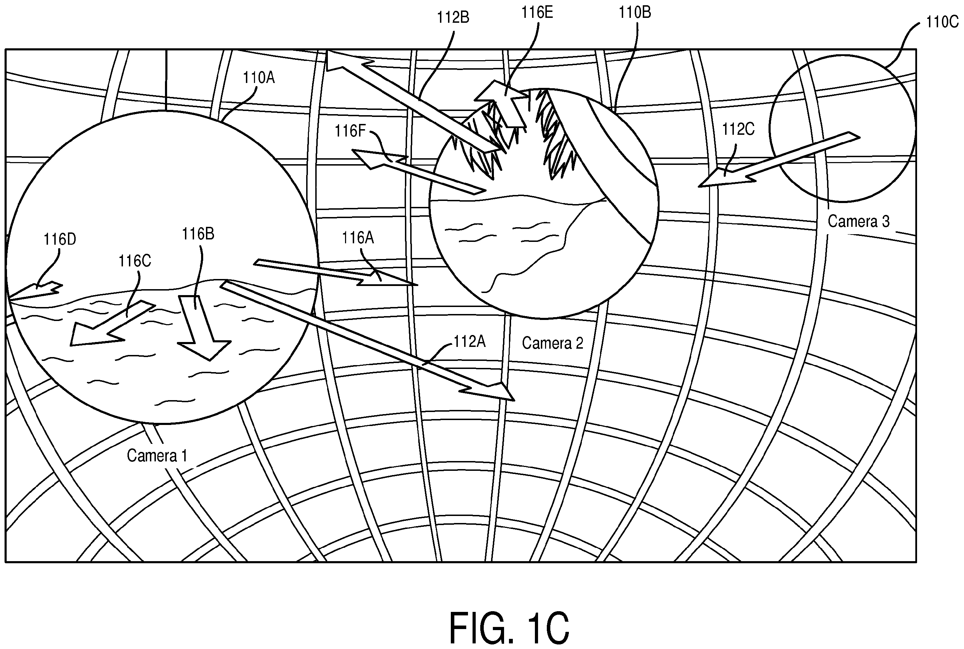

Alternatively or additionally, additional indicators, such as arrows 116A-F may be included in a sphere (as shown at FIG. 1C) to represent multiple directions related to the viewing behavior (for example, area of focus and/or direction of view). Moreover, the length of an arrows 116A may indicate that a greater quantity of viewers are viewing the video content (which is associated with sphere 110) from the direction of arrow 116A, when compared to the quantity of viewers viewing from the direction of 116C.

In some example embodiments, the orientation of the frame(s) within each of the spheres 110A-C may be adjusted by moving a corresponding orientation indicator 112A-C. For example, moving, via a user interface, the arrow 112A down (or in some other direction such as up) may cause the part of the frame to be visible to the viewer within sphere 110A to be a blue sky, while moving the arrow 112A up (or in some other direction such as down) may cause the part of the frame visible to the viewer at sphere 110A to show sand. As frames of the multidirectional video content are processed, such as viewed, edited, manipulated, and/or the like, the orientation of the frames may be controlled using the orientation indicators.

In some example embodiments, there may be provided a way to control, based on objects such as spheres and/or the like, the processing including viewing, editing, and/or manipulating of video content including multidirectional video content having content from different orientations, such as video content having content associated with multiple directions.

In some example embodiments, an apparatus, such as a video editor and/or other type of apparatus, may generate a user interface including an object, such as a sphere user interface element and an orientation indicator user interface element (also referred to herein as "orientation indicator") to enable editing of the video content including multidirectional video content. The user interface may be displayed in a variety of ways. For example, the user interface including the object(s) (for example, spheres and/or other types of 3D objects) and/or orientation indicator(s) may be displayed on direct view displays or on virtual image displays. Examples of direct view displays include self-illuminating flat panel displays and displays where the image is projected on a surface. Examples of virtual image displays are displays where the image is viewed through optical elements, such as goggles or other head-mounted displays. The user interface may be displayed in 2D or 3D including stereoscopic 3D.

Although some of the examples described herein refer to the video content including the multidirectional video content in terms of live video captured by at least one multidirectional camera, the video content including the multidirectional video content may be stored, and/or may include other types of content including virtual reality (VR) video content, mixed reality content, augmented reality (AR) video content, 3D video content, 2D video content, and/or the like. Moreover, the video content may include video generated by a computer, such as computer-generated video content. Furthermore, the video content may include audio as well as other types of metadata, such as positioning information, yaw, pitch, time, and/or the like.

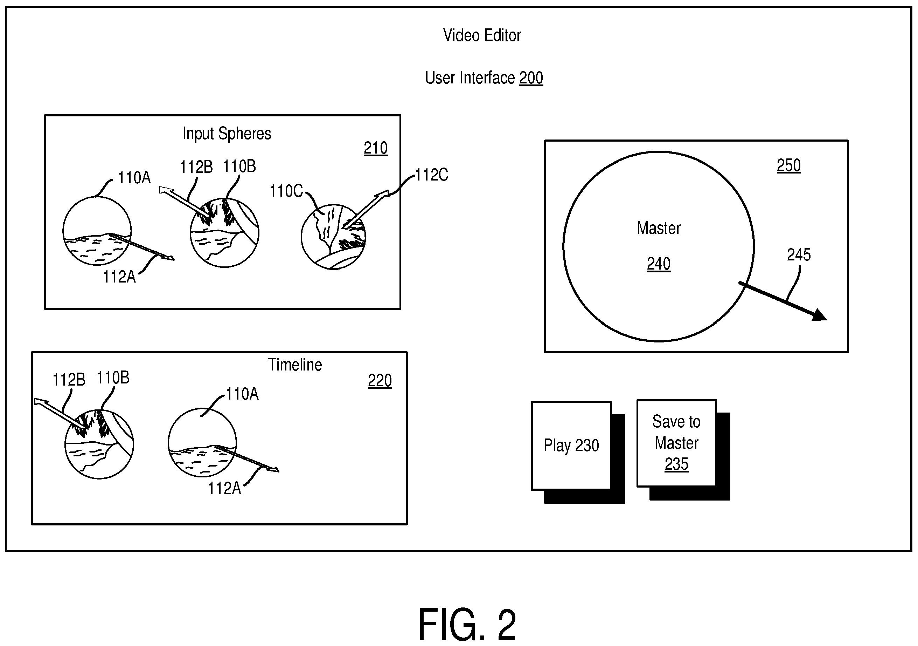

FIG. 2 depicts an example of a user interface 200, in accordance with some example embodiments. The user interface 200 may be associated with a video editing system, a video editing application, and/or other types of apparatus or systems as well. Moreover, the user interface 200 may be presented in 3D, AR, and/or VR via, for example, direct view displays or virtual image displays. In accordance with some example embodiments, the user interface 200 may include an object, such as a sphere and/or other type of 3D object, associated with at least one frame of video content (for example, multidirectional video content). For example, the at least one frame may be presented within the sphere. Alternatively or additionally, the object, such as a sphere and/or other type of 3D object, may include an orientation indicator to control the orientation of at least the frame of the video content presented within the frame.

In the example of FIG. 2, the user interface 200 may be generated by at least one processor and/or may be presented on a display of an apparatus, such as a user equipment. In some example embodiments, the user interface 200 may include a first portion 210, a second portion 220, and/or a third portion 250.

The first portion 210 may include input frames of video content including panoramic video content, which may be selected for editing, for example. In the example of FIG. 2, the first portion 210 may include a plurality of spheres 110A-C, each of which may include at least one frame of multidirectional video content and may include an orientation indicator 112A-C. The at least one frame may represent a video segment such as a clip of the video content. Although the first portion 210 depicts only three spheres 110A-C, the first portion may include other quantities of spheres.

In some example embodiments, the first portion 210 of the user interface 200 may be used to present the objects such as a sphere and/or other type of 3D object (which represent frames of multidirectional video content) available to a video editor for editing. In the example of FIG. 2, the sphere 110A may be selected, via the user interface 200, for editing by dropping and dragging the sphere 110A into the second portion 220. Moreover, a human computer interface, such as a hand controller, hand tracking device, other human computer interface, and/or the like, may be used to select, drop, and drag the sphere 110A into the second portion 220. The orientation of the frame(s) associated with sphere 110A may be manipulated, via a user interface, by at least adjusting the orientation indicator 112A. Likewise, the sphere 110B may be selected, via the user interface, for editing and placed into the second portion 220. Like sphere 110, the orientation of the frame(s) associated with sphere 110B may be manipulated by at least adjusting the orientation indicator 112B. Although the previous example describes the frame orientation adjusted at the first portion 210, the frame orientation may be adjusted at other times using the orientation indicator (for example, while in portion 220, 250, and/or the like).

In the example of FIG. 2, the second portion 220 represents a video timeline including a sequence of sphere 110B and sphere 110A (which were selected from the first portion 210). This timeline may represent the sequence of sphere 110B followed by sphere 110A. The order of the sequence may be based on the order of selection of the spheres (for example, 110B and 110A) or the placement positions of the spheres in the second portion 220. In this example, the frame(s) of multidirectional video content associated with sphere 110B would play before the frame(s) of multidirectional video content associated with sphere 110A. The user interface 200 may also include a user interface element 230 for playing selected sphere(s). While in the second portion, selection of the orientation indicators 112A or B may allow an adjustment to the orientation of at least one frame of video. The orientation of a first frame associated with sphere 110B may be moved to another orientation by adjusting the arrow 112B down to view the sky for example, up to view the sand for example, or side to side, for example. In some example embodiments, each frame may have a corresponding orientation indicator, which may be adjusted to change the orientation of the corresponding frame.

While in the second portion 220, the spheres 110B and 110A may be manipulated in other ways as well. For example, the length of the video content associated with sphere 110B and/or sphere 110A may be modified. Alternatively or additionally, visual and/or audio characteristics may be manipulated and thus modified as well (for example, by adding or cutting away frame(s) to modify the visual and audio characteristics of the video content associated with sphere 110B and/or sphere 110A). The one or more frames associated with the sphere 110B may comprise a video segment, which can be edited, manipulated, and/or combined with other video segments associated with other spheres, such as the video segment associated with sphere 110A. As noted, a video segment comprises one or more frames of the video content. The editing may include, for example, changing he begin or end times of the video segment associated with sphere 110B (or 110A), changing orientation of the video segment associated with sphere 110B (or 110A), combining at least portion of the video segment associated with sphere 110B with at least portion of the video segment associated with sphere 110B, and/or perform other operations on the audio and/or video characteristics of the video segment(s) associated with sphere 110B and/or 110A.

Alternatively or additionally, a sphere can be split up into a plurality of other spheres. For example, when a sphere 110A is moved from first portion 210 to second portion 220, the sphere 110A may be split into 2 spheres (for example, one with a first portion of the frames originally associated with sphere 110A and another with a second portion of the frames originally associated with sphere 110A).

Alternatively or additionally, each frame or group of frames of video content may be presented within a sphere. For example, video content having 50 frames may appear in the second portion 220 as 50 spheres. In this example, each of the frames may be presented with a corresponding sphere. This may enable frame-by-frame editing or editing based on time slides. Alternatively or additionally, the group of frames, such as 25, may be associated with a first sphere while the remaining frames may be associated with a second sphere.

In the example of FIG. 2, the sequence arranged in the second portion's 220 timeline may also be saved (for example, by selecting save 235) as a master output sequence of video content and associated with a master sphere 240 located at the third portion 250. The master sphere 240 may thus represent the concatenation of the video frames associated with sphere 110B followed by sphere 110A, for example. To illustrate further, the video content associated with 110B and 110A may be edited. Alternatively or additionally, the master sphere 240 may include an orientation indicator 245, in accordance with some example embodiments. The orientation indicator 245 may indicate the orientation of a selected frame in the sequence of frames associated with the master sphere 240. For example, the orientation indicator may indicate the orientation of a first frame of the sequence of frames forming the video clip associated with master sphere 240. The master sphere 240 may also present within the sphere 240 video content of at least a frame (for example, a first frame of the sequence of frames forming the video clip). Although the previous example describe the second portion as a timeline 220, the second portion may, in addition to or alternatively, an area where spheres can be viewed, edited, and/or the like.

In some example embodiments, the selection, via user interface 200, of any sphere in 210, 220, or 250 (and/or selection of the play indicator 230) may cause the video content of the selected sphere to be played and the frames of the sphere and corresponding sequence presented sequentially at a given frame rate, for example 30 frames per second. In the play mode, the orientation indicators may be shown frame by frame.

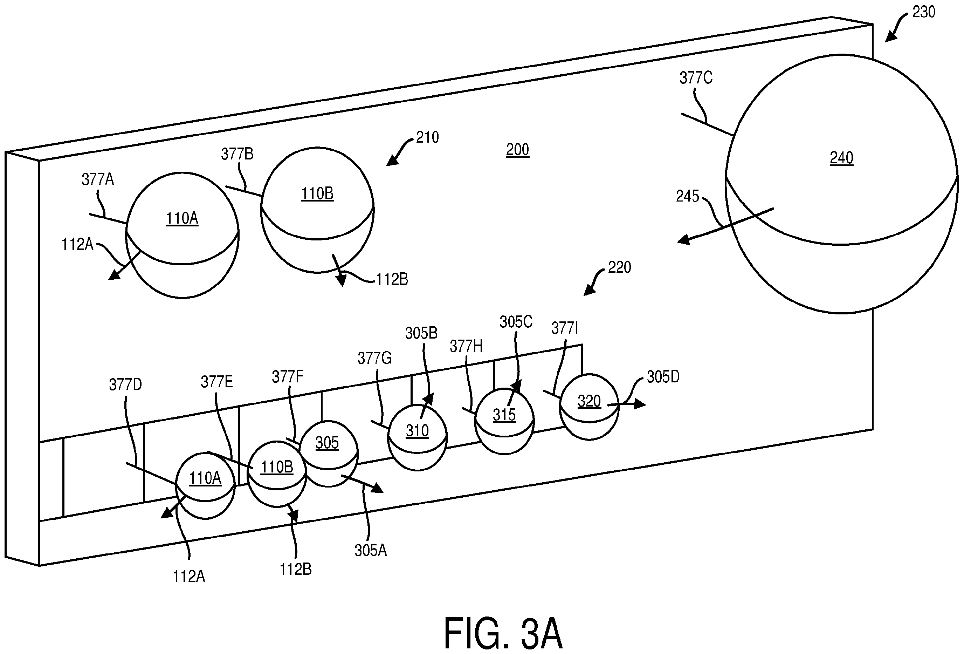

FIG. 3A depicts the user interface 200 of FIG. 2 presented in a perspective view in a 3D domain, in accordance with some example embodiments. For example, a user-viewer may view the user interface 200 using an immersive viewing device, such as VR goggles or 3D glasses, and/or the like. As described herein, "3D domain" refers to interfaces, including viewing, interacting or both, in 3D, VR, mixed reality, AR, and the like. 3D domain interfaces can be implemented without needing glasses or goggles or can be implemented with the use of glasses or goggles.

In the example of FIG. 3A, the spheres 110A-B, 240, 305-320, orientation indicators 112A, 112B, 305A-D, and 245, and distance indicators 377A-I may be presented as virtual objects. For example, a user-viewer may view, through 3D glasses or immersive VR goggles, the sphere 110A as a virtual object, which appears in 3D in the 3D domain. In this example, the user-viewer may select, while in the 3D domain, the sphere 110A. The selected virtual object may then be moved, in the 3D domain, from first portion 210 to second portion 220 to form the timeline of spheres shown at 220. This selection in the 3D domain may be performed via a variety of user interface types, such as a human computer interfaces including 2D, 3D, VR, mixed reality, and/or AR interfaces. In 3D domain for example, a user-viewer may use a gesture, motion, or movement, to select and move, in 3D domain, the sphere 110A or adjust the orientation indicator 112A. To illustrate further, the user-viewer may move or rotate a hand physically, which may cause the orientation indicator 112A and sphere 110A including the frame(s) presented within the sphere to rotate virtually in the user interface 200-causing thus the orientation change of the frame(s) presented within the sphere 110A. In this way, the user-viewer can see the orientation of at least the first frame presented within the sphere 110A. If sphere 110A is associated (e.g., linked) with additional frames forming a video segment or clip, the orientation of the additional frames may be adjusted in accordance with the orientation indicator as well.

Although some of the examples refer arrows and other types of user interface elements for the orientation indicators, the orientation indicator may be the sphere itself, markings on the sphere, and/or other types of graphical user interface elements which may be coupled to or associated with the sphere.

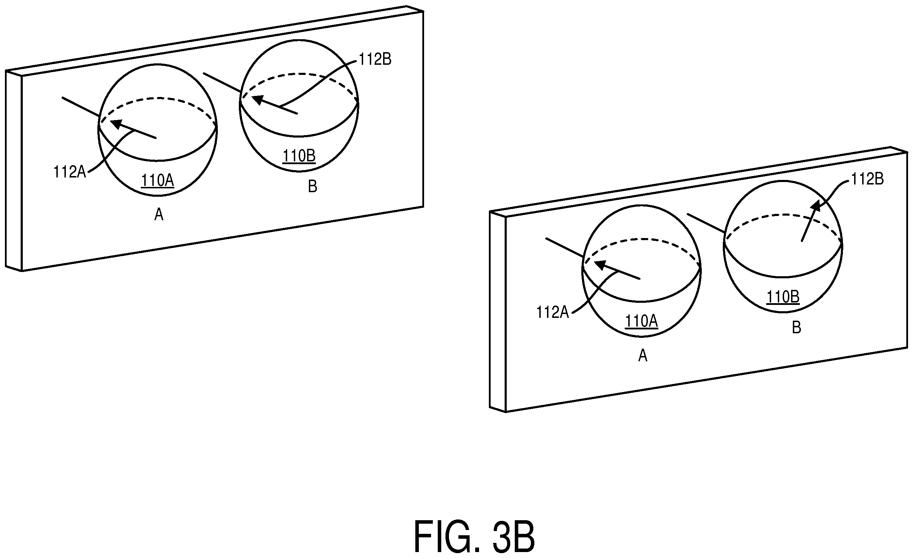

FIG. 3B depicts additional examples of implementations of the spheres 110A-B including the corresponding orientation indicators 112A-B, in accordance with some example embodiments. In the example of FIG. 3B, the orientation indicators 112A-B are presented within the sphere. In this case, the sphere surface is transparent or semitransparent to allow viewing the arrow inside the sphere. In some example embodiments, a user-viewer may view (via a viewer device such as VR goggles/glasses, for example) the spheres 110A-110B including the perspective indicators 112A-B. In this example, the user-viewer may readily see the perspective of the frames associated with each sphere and modify during editing the perspective of the frames if needed.

In some example embodiments, any user input, such as a gesture, may be used to perform a task on a sphere. Which user input to perform and which task can be determined at implementation. For example, a gesture, such as a swipe, may be used to select, via user interface 200, spheres, change perspectives, and/or the like. The orientation indicator 112B is illustrated, for example, changed from that shown on the left sphere 110B to the orientation shown on the right sphere 110B.

In some example embodiments, the orientation of a first sphere may be applied to at least one other sphere. To apply the orientation of sphere 110A to other spheres 110B, 305, and 310 for example, the orientation indicator 112A of sphere 110A can be selected, copied, and applied to each of the spheres 110B, 305, and 310, so in this example spheres 110A, 110B, 305, and 310 would all have the same orientation.

In some example embodiments, if a multidirectional camera providing multidirectional video content does not capture a complete 360 degree panoramic view, a corresponding sphere (which presents content from that camera) may present views of the uncaptured directions in a predetermined format, such as a black screen, an image, a portion of the video, or another video.

Referring again to FIG. 3A, the distance of a sphere to the user interface 200 may be used to indicate a value (or strength) of a certain property, function, and/or aspect associated with the video content. For example, a distance indicator, such as distance indicator 377A may represent the length, in time or number of frames, represented by sphere 110A to be included in the master output sequence of video content represented by a master sphere 240. In some implementations, a distance indicator, such as distance indicator 377A may represent a value associated with a characteristic or property of the at least one frame presented within sphere 110A. The distance of the sphere 110A may be moved closer or farther from the user interface 200 to adjust the value. To illustrate further, the volume of the video content associated with sphere 110A may be controlled by adjusting the distance indicator 377A farther away from the user interface 200 (which would increase the length of the distance indicator 377A). In the example of FIG. 3A, sphere 110A may have a greater audio volume, when compared to sphere 305A, which is closer to the user interface 200 as indicated by the distance indicator 377F (having a shorter length and smaller distance to the user interface 200 when compared to distance indicator 377A). Although the previous example used the example of volume, other properties, functions, and/or aspects associated with the video content may be indicated or controlled using the distance indicators 377A-I.

In some example embodiments, deforming the sphere's 110A shape or volume in 3D domain may cause a certain function (for example, distortion, a special effects view, and/or other effect) to be applied to the frames of the sphere.

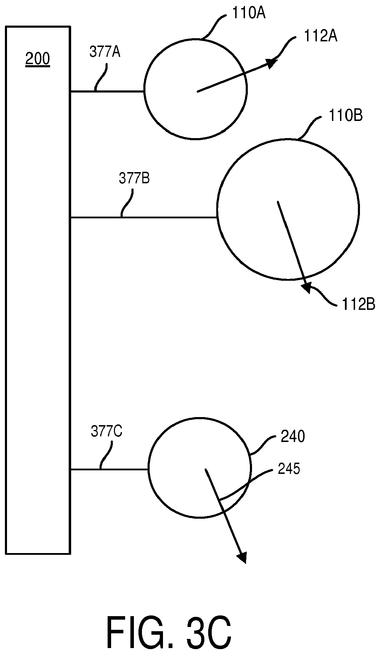

FIG. 3C depicts a side view of the user interface depicted at FIG. 3A, in accordance with some example embodiments. As noted, a user-viewer may be able to view the spheres 110A, 110B, and 240 in 3D, and perform the above noted video editing in a 3D domain, in accordance with some example embodiments.

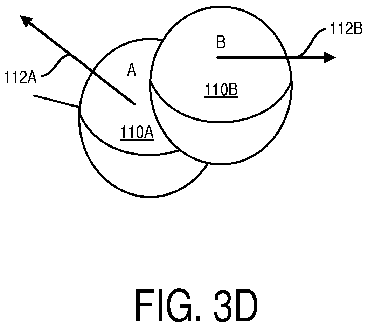

FIG. 3D depicts an example of combining spheres 110A-B, in accordance with some example embodiments. When editing video content including multidirectional video content for example, the spheres 110A-B presented on a user interface, such as user interface 200, may be selected and combined via the user interface to merge the frames associated with each sphere. When merged, the spheres 110A-B can be edited as a group. For example, the orientation indicator adjustment would affect both spheres 110A-B as a group. Although only two spheres are merged at FIG. 3D, other quantities of spheres may be joined as well. Moreover, the distance between the spheres, degree of overlap in volume or surface area in merged spheres, and/or relative angle between spheres may be used to change audio property and/or a visual property associated with video segments associated with the sphere 110A and/or sphere 110B.

In some example embodiments, the distance between spheres may also be used to control or indicate a value of a property or characteristic associated with the spheres. Referring to FIG. 3D again, the two spheres 110A-110B may be brought closer together on user interface 200 to control the strength of a property of the frames associated with each sphere. For example, the two spheres 110A-110B may be brought closer together on user interface 200 to control the strength of visual effect, such as the cross-image in the cut between the clips and/or the like. To illustrate further, merging or partly merging two or more spheres may be used to manipulate the visual and/or audio characteristics of the resulting merged video.

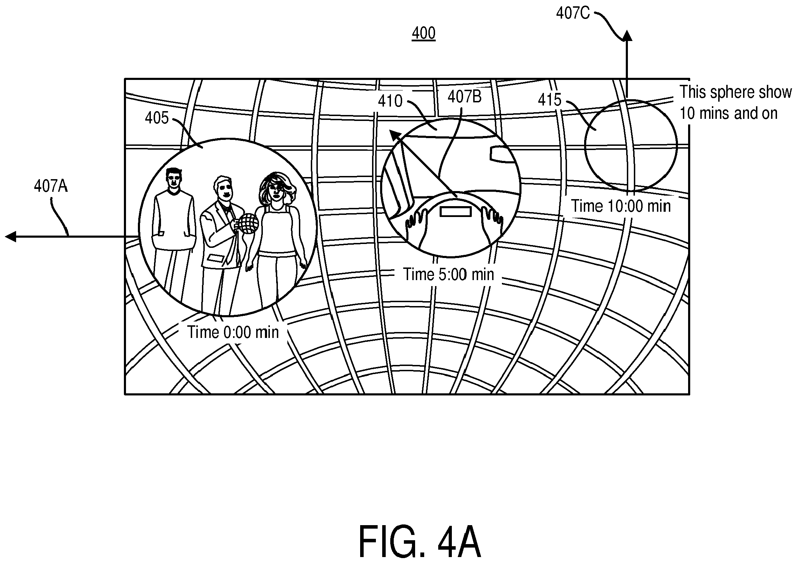

FIG. 4A depicts another example of a user interface 400 for presenting the spheres, in accordance with some example embodiments. In the example of FIG. 4A, the user interface 400 including the spheres 405-415 (as well as the orientation indicators 407A-C) may be presented in a 3D domain. For example, the user interface 400 may referred to as a so-called "super sphere" in the sense that the user interface presents the spheres 405-415 such that a user-viewer can get a visual indication of the video content of one camera at certain instants in time, such as 5 minutes, 10 minutes and 15 minutes, for example. The spheres may show the frame at the time instants and the direction of the corresponding orientation indicators. In some example embodiments, the super sphere 400 may be generated as an immersive 3D or VR user interface enabling the user-viewer (while wearing VR goggles, for example) to be immersed in the super sphere 400 while editing and/or the like. In addition to the spheres 405-415, the user-viewer may see an image on the inner surface of the super sphere 400 behind the spheres 405-415. The super sphere 400 image may be selectable and may be the enlarged image from any of the spheres 405-415 (or from other sources). The super sphere 400 may also include user interface elements with which the user-viewer may control and manipulate the visual content in spheres 405-415.

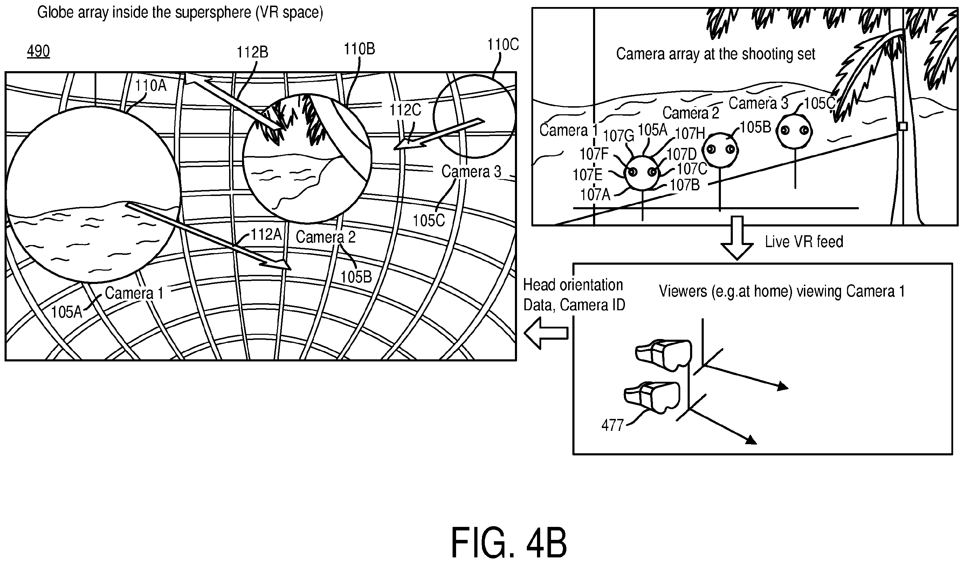

FIG. 4B depicts another example of a user interface 490 forming a super sphere of spheres, in accordance with some example embodiments. The super sphere at FIG. 4B depicts the sphere 110A for camera 1 105A, the sphere 110B for camera 2 105B, and the sphere 110C for camera 3 105C. Moreover, rotating a sphere, such as sphere 110A, 110B, and/or 110C, around an axis may change the orientation of the frame(s) of content associated with the corresponding sphere. In this way, a video editor may manipulate the perspective of the spheres, such that a user-viewer of the video segment associated with the spheres does not experience abrupt and likely disturbing changes in perspective in transitions from sequence to sequence, or from view from one camera to a view from another camera. The orientation indicators 112A-112C may provide an indication of the orientation of the camera and/or from the perspective of the likely line of sight or the direction corresponding to the point of attention of a viewer of the video frames.

Alternatively or additionally, the orientation indicators 112A-112C may indicate a user-viewer's head or eye orientation with respect to a camera. In the example of FIG. 4B, a wearer of a viewer 477 may be viewing the video captured by cameras 105A-C and the corresponding video content shown on spheres 110A-C. When this is the case, the user-viewer's 477 head orientation data may indicate the perspective, which in this example is the user-viewer's point of attention or focus in the video frame(s) of a given sphere associated with a given camera. This head orientation data may be used by the editor of the video to control the orientation of each of the spheres, for example when in multi-camera production making transitions from the view of one camera to the view of another camera. Returning to the previous example, when the editor cuts from the camera 105B to the camera 105A view, the orientation of the frame(s) associated with camera 105A and sphere 110A may be changed so it matches with the viewer's 477 head orientation when the viewer 477 viewed the end of the sequence 110B of camera 105B (e.g., at the last frame of camera 105B before cutting to camera 105A).

The multiple side by side spheres 110A-C depicted at FIG. 4B may enable a quick overview of the video content generated by the multi-camera setup. And, the spheres 110A-C may enable playback of the corresponding video associated with each sphere. For example, a user-viewer may select a sphere for playback by hovering over the sphere and adjusting while hovering the orientation indicator angle in 3D/VR space. Alternatively or additionally, the spheres may present statistics regarding the viewers who watch the video (for example, heat maps or other information indicating portions of the sphere most commonly or frequently viewed).

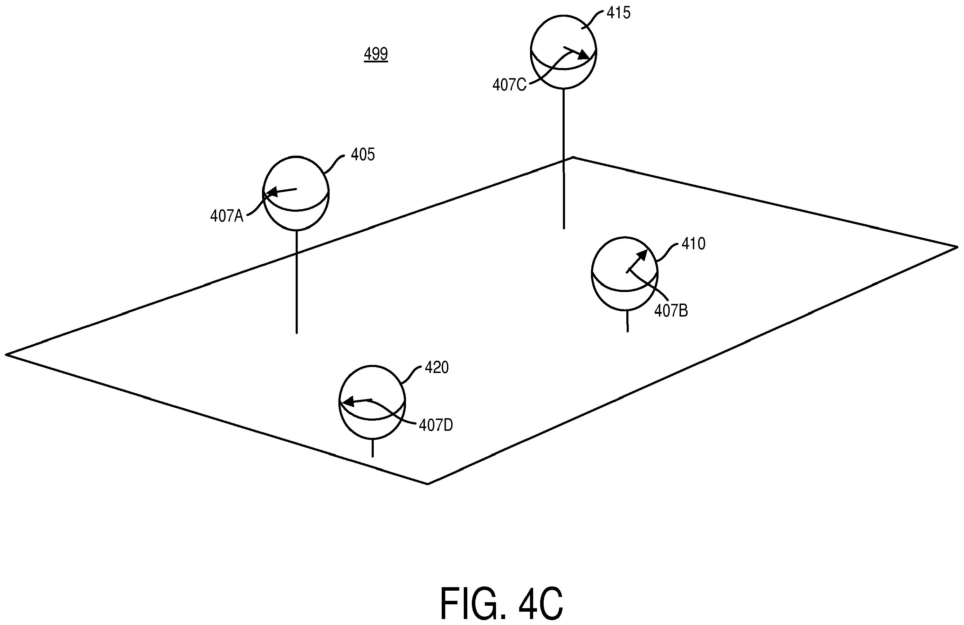

FIG. 4C depicts another example showing a user interface 499 including the spheres 405-420 and orientation indicators 407A-D, in accordance with some example embodiments. The spheres 405-420 may be presented in a 3D domain to represent the height of the image source, such as the multidirectional camera. FIG. 4C enables the user-viewer to obtain a visual indication of the height of the multidirectional cameras (for example, the so-called camera setup) that captured the video content associated with each sphere. In this example, the sphere 415 is located higher in the user interface 499, when compared to than the other spheres 405, 410, and 420, so the video content (which is associated with the sphere 415) was captured with a camera located higher than the cameras associated with spheres 405, 410, and 420. In this way, video editing may take into account camera height in addition to perspective information provided by the perspective indicators 407A-D.

In some example embodiments, the user interface 499 may be implemented as part of a super sphere, such as super sphere 400, to enable the user-viewer to be immersed in the super sphere including height-based spheres (as shown at 499) while editing and/or the like. In addition to the height information which may be assigned as z-axis coordinate, FIG. 4C may include the horizontal (for example, x, y) coordinate information, and FIG. 4C may include and present the 3D coordinates (for example, x, y, z) and the location of the cameras in the 3D (for example, x, y, z) space, as well as the orientation of the cameras.

As noted, the relative position of the spheres 405, 410, 415, and 420 may provide an indication of each of the camera locations which captured the video content associated with each of the spheres 405, 410, 415, and 420. For example, the location of sphere 405 may provide an indication of the location (for example, 3D location in terms of height, latitude, and longitude) of a first camera that captured the video content associated with sphere 405. While the location of sphere 415 may provide an indication of the location of a second camera that captured the video content associated with sphere 415. Thus, user interface 499 may provide a representation of camera location on the shooting site.

Although the previous example refers to the spheres 405, 410, 415, and 420 providing an indication of the camera location in 3D space in terms of height, latitude, and longitude, the spheres 405, 410, 415, and 420 may indicate graphically other information related to captured 3D video content, and the video content may represent other types of video content including computer-generated video content. In the case of multi-freedom cameras or other systems capturing volumetric 360 degree image content with six degrees of freedom (6DOF), the video content may include this 6DOF video content. In the 6DOF case, a user-viewer (for example with a head-mounted display) may be immersed in the VR space and may move around in VR space and see the corresponding 360 degree views of the captured scene. The user-viewer may move translationally along three axis (for example, x such as forward/back, y such as left or right, and Z such as up and down) and further change the head orientation by rotating the head around the three axes, also described as yaw, pitch, and/or roll. Instead of using head-mounted displays to present 6DOF content, a system shown in FIG. 4C may be used. When the spheres 405, 410, 415, and 420 present the 6DOF image data, each sphere shows the corresponding 360 view from the sphere's xyz location. The editor user may move a sphere around in xyz space and see the corresponding 360 view on the sphere. Moreover, the editor's user-viewer may select/activate multiple spheres at different locations, and the spheres show simultaneously what the views, with still images or live video, from the spheres look like. In addition to 6DOF content captured by cameras on live scenes, the 6DOF content can be computer generated.

In some example embodiments, the surface texture of a 3D object, such as the sphere, may change based on the type of content. For example, if there is a human face to be presented within the sphere (which may face the user-viewer), the surface of the sphere may be modified so that the location of the person's nose rises from the surface of the sphere. This may provide an illusion or effect of 3D (autostereoscopic view). In this example, a 2D layer on the sphere is modified based on the type of content to form the 3D video content layer. The surface of the sphere may also be modified, based on content, to depict whether a portion of the video content is in the foreground or background. For example, the surface of the sphere may be modified (for example, the distance from the sphere surface to the center of the sphere) so that image elements that are recognized to be in the background are behind (the surface distance in such places decreases) and the elements in the foreground move ahead (the distance from the center increases).

Although some of the examples herein refer to viewing the spheres, orientation indicators, super spheres, and/or the like in immersive 3D or VR form, the spheres may be projected into a 2D plane in accordance with some example embodiments.

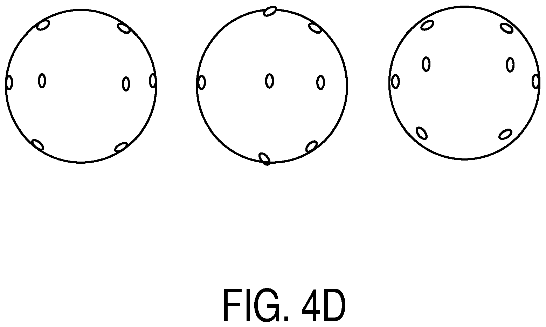

FIG. 4D depicts another example of spheres, in accordance with some example embodiments. The three spheres represent three cameras or three time incidents of one camera during a video sequence (clip) with three different orientations of the camera. The dots indicate the locations of the lenses on the camera and indicate how the orientation of the camera has changed.

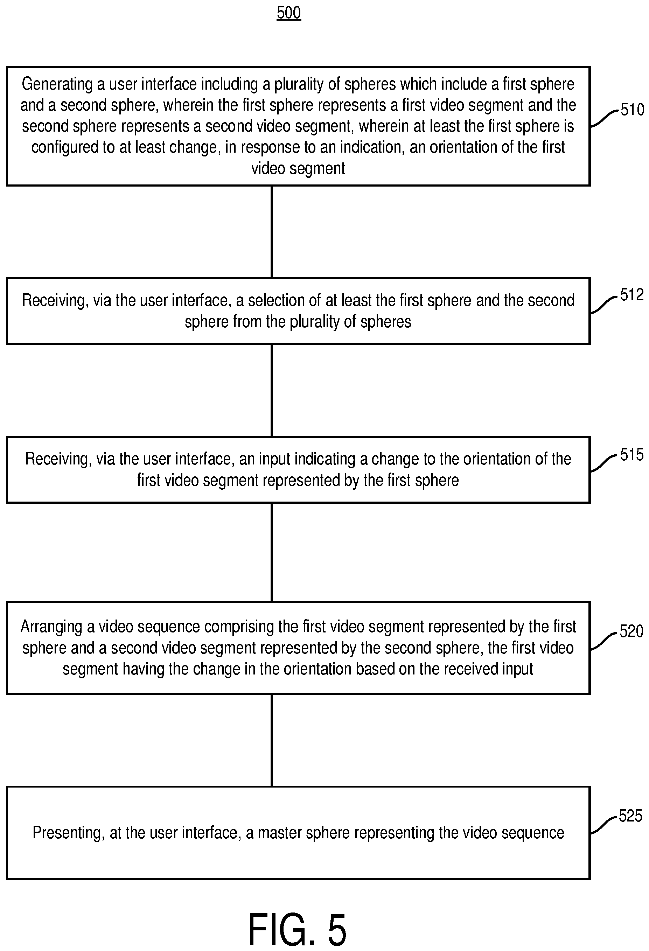

FIG. 5 depicts a process 500 for handling video content, in accordance with some example embodiments. The description of FIG. 5 also refers to FIGs. 2 and 3A.

At 510, a user interface including a plurality of objects, such as spheres and/or the like, may be generated, in accordance with some example embodiments. For example, a user interface, such as user interface 200, may be generated to include a plurality of objects, such as the first sphere 110A, second sphere 110B, and so forth as shown at FIG. 2 and 3A. The first sphere 110A may represent a first video segment, such as at least one frame of video content including panoramic video content, while the second sphere 110B may represent a second video segment, such at least one frame of video content including panoramic video content. For example, the first sphere 110A may be associated with, or linked to, the first video segment, while the second sphere 110B may 110A may be associated with, or linked to, the second video segment. Moreover, the plurality of spheres 110A-B may be configured so that the orientation of the video segments can be changed in response to, for example, an indication, such as an input, received via the user interface, changing the orientation indicators 112A or B.

At 512, optional operation(s) may be performed. For example, when the user interface is being generated at 510, the user interface may not include some or all of the plurality of objects, such as the first sphere 110A, second sphere 110B. The user interface may represent an initial state or a previous state, for example, that does not include the first object and/or the second object. If the first and/or second objects are not included, the user interface may receive an input to select, for example, from the plurality of objects, the first object and/or the second object, in accordance with some example embodiments. For example, the first sphere 110A and the second sphere 110B may be selected, via user interface 200, from for example a plurality of candidate spheres as shown at FIG. 2. To illustrate further, an input/output device, such as a mouse, a pointing device, and/or a human computer interface device, may cause an input to be received (e.g., via the user interface 200 and/or a processor associated with execution of the user interface), and this input may indicate the selection of the first sphere 110A and the second sphere 110B.

At 515, the user interface may receive an input indicating a change to the orientation of the first video segment represented by the first object, in accordance with some example embodiments. For example, the orientation of the first sphere 110A may be changed, via user interface 200, to change the orientation of at least the first frame of the video segment associated with the first sphere 110A. To illustrate further, moving the orientation indicator 112A (or rotating sphere 110A) may change the orientation of the frame(s) of video content associated with the first sphere 110A. To illustrate further, an input/output device, such as a mouse, a pointing device, and/or a human computer interface device, may cause an input indicating a change to the orientation of the first video segment input, and this input may be received (e.g., via the user interface 200 and/or a processor associated with execution of the user interface) to change (or cause the change of) the orientation of the frame(s) of video content associated with the first sphere 110A.

At 520, a video sequence may be arranged, in accordance with some example embodiments. The video sequence may include the first video segment represented by the first sphere and the second video segment represented by the second sphere. Moreover, the first video segment may include the change in the orientation based on the received indication. In the example of FIG. 2 at 220, the video sequence is formed by arranging the second sphere 110B (which represents a video segment) and the first sphere 110A (which represents a video segment). In the example of FIG. 2, the video sequence, when played, may include the second video segment followed by the first video segment. Alternatively or additionally, the orientation of the second sphere may be changed. Alternatively or additionally, only the orientation of the second sphere but not the first sphere may be changed.

At 525, the user interface may present a master object representing the video sequence, in accordance with some example embodiments. For example, the master sphere 250 may represent the video sequence including the second video segment followed by the first video segment. In the example of FIG. 2, at least one of the segments may have an adjustment in the orientation.

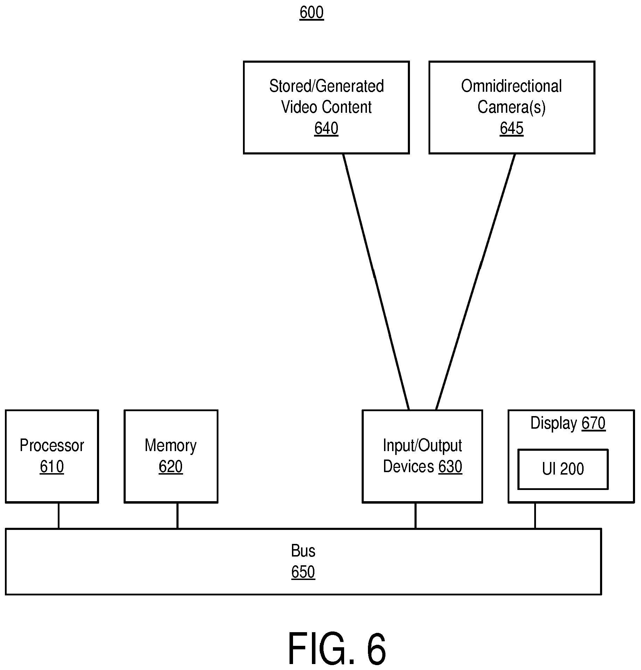

FIG. 6 depicts a block diagram illustrating an apparatus 600, in accordance with some example embodiments. The apparatus 600 may include at least one processor 610 and at least one memory 620, which may include instructions such as program code which when executed by the at least one processor causes operations disclosed herein with respect to the spheres, video editing, and/or other operations disclosed herein. The apparatus 600 may further include at least one input/output device 630 and at least one display 670 for presenting at least the user interface 200 including the objects (e.g., spheres and/or other types of 3D objects) and/or perspective indicators. The display 670 may include, or be coupled to, a direct view display and/or a virtual display. The apparatus 600 may also include bus 650 to couple the components of the apparatus 600. The video stream(s) generated by the cameras, such as the multidirectional cameras 646, may be received by an input/output device 630 of the apparatus 600. Moreover, stored and/or computer generated video streams may be may be received by an input/output device 630 of the apparatus 600.

The processor 610 may be capable of processing instructions stored in the memory 620 and/or on stored in other devices to enable editing video based on the spheres and/or perspective indicators discloses herein. The memory 620 may be a computer readable medium such as volatile or non-volatile that stores information within the apparatus 600. In some example embodiments, the input/output device 640 may provide input and/or output functionality, and may include a keyboard, a pointing device, a human computer interface device, and/or the like. Alternatively or additionally, the input/output device 440 may include wireless and/or wired interface to enable communication with other devices, such as other network nodes. For example, the input/output device 640 may include an Ethernet interface, a WiFi interface, a cellular interface, and/or other wired and/or wireless interface to allow communications with one or more wired and/or wireless networks and/or devices. For example, the cameras 645 and/or stored/generated video content 640 may be accessed via a wired and/or wireless interface.

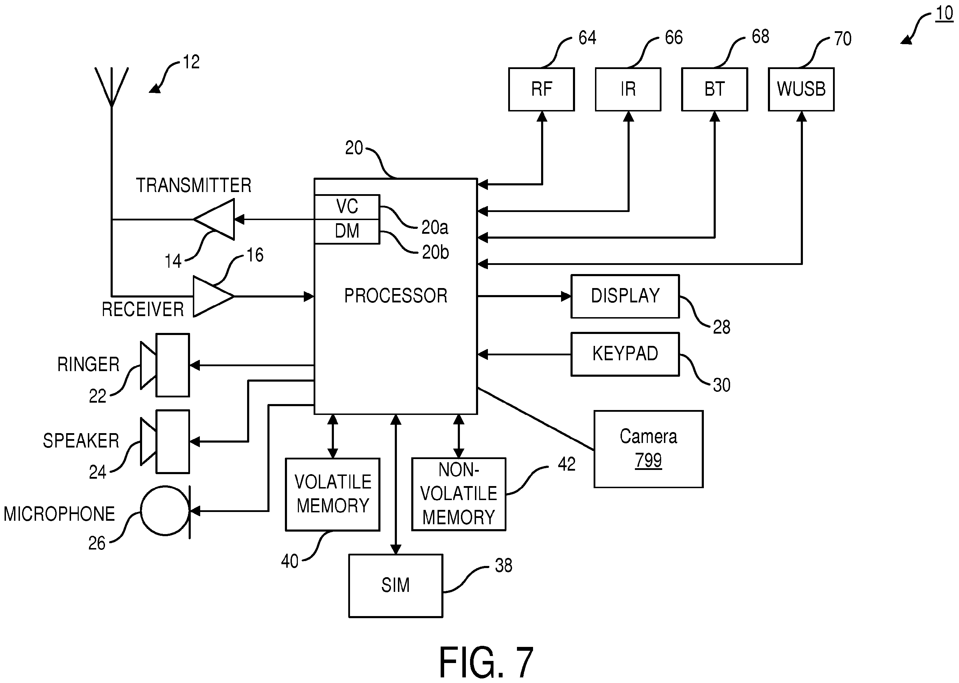

FIG. 7 illustrates a block diagram of an apparatus 10, in accordance with some example embodiments.

The apparatus 10 may represent a user equipment, such as a smartphone, tablet, computer including a wireless interface, and/or other device configured to at least provide a user interface including the spheres and/or perspective indicators, in accordance with some example embodiments.

In the example of FIG. 7, the apparatus 10 may include, or be coupled to at least one camera 799, such as a multidirectional camera. Moreover, the apparatus 10 may include, or be coupled to at least stored (and/or computer generated) video content including panoramic video content. Alternatively or additionally, the apparatus 10 may couple to a viewing device, such as VR, AR, or 3D goggles or glasses. Alternatively or additionally, the apparatus 10 may couple to a projector for projecting, for example, user interface 200.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 7 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may include, or be coupled to, a direct view display and/or a virtual display. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 7, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a BluetoothTM (BT) transceiver 68 operating using BluetoothTM wireless technology, a wireless universal serial bus (USB) transceiver 70, a BluetoothTM Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein including, for example, generating a user interface including a plurality of objects, the plurality of objects including a first object and a second object, wherein the first object represents a first video segment and the second object represents a second video segment, wherein at least the first object is configured to at least change an orientation of the first video segment; receiving, via the user interface, an input indicative of a change to the orientation of the first video segment represented by the first object; and arranging a video sequence comprising the changed first video segment represented by the first object and the second video segment represented by the second object, wherein the changed first video segment includes the change in the orientation based on the received input.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to control and/or provide one or more aspects disclosed herein (see, for example, process 500 and/or other operations disclosed herein). For example, the processor 20 may be configured using computer code stored at memory 40 and/or 42 to at least including, for example, process 500 and/or the like.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiment, the application logic, software or an instruction set is maintained on any one of various computer media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 7, computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may be enhanced viewing, editing, and/or manipulation of video content including multidirectional video content.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

## Claims

1. An apparatus comprising means for:
generating a user interface including a plurality of objects, the plurality of objects including a first object and a second object, wherein the first object represents a first video segment and the second object represents a second video segment, wherein at least one of the first object and the second object is configured to at least change an orientation of the respective first video segment or second video segment;
receiving, via the user interface, an input indicative of a change to the orientation of the first video segment represented by the first object; and
arranging a video sequence comprising the changed first video segment represented by the first object and the second video segment represented by the second object, wherein the changed first video segment includes the change in the orientation based on the received input.

2. The apparatus of claim 1, wherein the means is further configured for at least:
receiving a selection of at least one of the first object and the second object to be included in the generating of the user interface; and wherein the input is received before or after the selection of the first object and the second object.

3. The apparatus of any of claims 1-2, wherein the first object represents the first video segment by at least presenting, within the first object, at least one frame of the first video segment, and wherein the second object represents the second video segment by at least presenting, within the second object, at least one frame of the second video segment.

4. The apparatus of any of claims 1-3, wherein at least one of the first object and the second object includes a graphical user interface element to control the orientation of the respective first video segment or second video segment.

5. The apparatus of any of claims 1-4, wherein the means is further configured for at least:
receiving, via the user interface, another input indicative of a change to the orientation of the second video segment represented by the second object; and
wherein the video sequence comprising the changed first video segment represented by the first object and the changed second video segment represented by the second object, wherein the changed second video segment includes the change in the orientation based on the received another input.

6. The apparatus of any of claims 1-5, wherein the first video segment and/or the second video segment includes one or more of multidirectional video content captured by a multidirectional camera, computer-generated video content, virtual reality video content, augmented reality video content, mixed-reality video content, three-dimensional video content, and two-dimensional video content.

7. The apparatus of any of claims 1-6, wherein the orientation of the first video segment is determined from an orientation of a camera capturing the first video segment, and/or determined from data, wherein the data indicates viewing behavior, viewing direction, and/or a point of attention on at least one frame of the first video segment.

8. The apparatus of any of claims 1-7, wherein the means is further configured for at least:
receiving, via the user interface, a change in a position, a shape, and/or a volume, of the first object, wherein the change modifies an audio property and/or a visual property associated with at least one frame of the first video segment.

9. The apparatus of any of claims 1-8, wherein the means is further configured for at least:
receiving, via the user interface, an input merging the first object and the second object, the merged first object and second object having a transition effect applied between the first video segment and the second video segment.

10. The apparatus of any of claims 1-9, wherein at least one of the plurality of objects include a sphere and/or a polyhedron, wherein the first object comprises a first sphere and/or a first polyhedron, and wherein the second object comprises a second sphere and/or a second polyhedron.

11. The apparatus of claim 10, wherein relative positons of the plurality of objects indicate locations of the multidirectional cameras capturing the first video segment and the second video segment.

12. The apparatus of any of claims 1-11, wherein the means comprises at least one processor and at least one memory including computer program code, the at least one memory including the computer program code configured to, with the at least one processor, cause performance of the apparatus.

13. A method comprising:
generating a user interface including a plurality of objects, the plurality of objects including a first object and a second object, wherein the first object represents a first video segment and the second object represents a second video segment, wherein at least the first object is configured to at least change an orientation of the first video segment;
receiving, via the user interface, an input indicative of a change to the orientation of the first video segment represented by the first object; and
arranging a video sequence comprising the changed first video segment represented by the first object and the second video segment represented by the second object, wherein the changed first video segment includes the change in the orientation based on the received input.

14. The method of claim 13 further comprising receiving a selection of at least one of the first object and the second object to be included in the generating of the user interface; and, wherein the input is received before or after the selection of the first object and the second object.

15. A computer-readable storage medium including program code, which when executed causes operations comprising:
generating a user interface including a plurality of objects, the plurality of objects including a first object and a second object, wherein the first object represents a first video segment and the second object represents a second video segment, wherein at least the first object is configured to at least change an orientation of the first video segment;
receiving, via the user interface, an input indicative of a change to the orientation of the first video segment represented by the first object; and
arranging a video sequence comprising the changed first video segment represented by the first object and the second video segment represented by the second object, wherein the changed first video segment includes the change in the orientation based on the received input.
